# EUROPEAN PATENT APPLICATION

(11) **EP 0 664 391 A1**
(43) Date of publication of application: **26.07.1995**
(21) Application number: 95300025.4
(22) Date of filing: 04.01.1995
(51) Int. Cl.: F02M 37/22, F02M 1/16, B01D 35/26

(54) **Filter assembly having a primer pump**

(30) Priority: 19.01.1994 FR 9400519
(71) Applicant: LUCAS INDUSTRIES public limited company, Solihull, West Midlands B91 3TX (GB)
(72) Inventor: Brun, Philippe, F-41350 Vineuil (FR)
(74) Representative: Thompson, George Michael

(57) **Abstract**

A filter assembly includes a casing (10) which together with a closure (16) defines a filter chamber (9) in which a filter element (28) is located. Formed in the wall of the casing is an opening (34) which is surrounded by a boss (35) machined to define a step (36) against which is located the rim (37) of a substantially hemispherical hollow bulb (38).

Depression of the bulb causes fluid within the chamber to be expelled through an outlet (20) and relaxation of the bulb draws fluid into the filter chamber through an inlet (24).

## Description

This invention relates to a filter assembly having a priming pump, in particular for the fuel system of a diesel engine.

Manual priming pumps are known which include a body of flexible material of which the end openings are each provided with a connecting end piece, in the immediate proximity of which is disposed a non-return valve. In use the valve on the upstream side opens for the inlet of fuel and the valve on the downstream side with respect to the direction of fuel flow in the body, opens for the delivery of fuel, the user alternately pressing the flexible body and relaxing his pressure.

EP-A-0164548 shows an arrangement in which a diaphragm pump is incorporated in the support casing of the filter assembly.

FR-A-2528912 shows a filter assembly in which the casing for the filter element is made of flexible material in one example and in another example the casing incorporates a flexible portion which is spring biased and incorporates a manually operable actuating member.

The assemblies which in general include springs and mechanical compression elements, are complicated to produce and are therefore expensive and the object of the present invention is to produce such a filter assembly which is simpler to construct.

A filter assembly according to the invention includes a casing which with a closure, defines a filter chamber, inlet and outlet connections to said chamber, a filter element mounted in the chamber and through which the fuel passes as it flows between the inlet and the outlet and a manually operable priming pump operable to induce flow between the inlet and the outlet characterised in that said priming pump comprises non-return valves in said inlet and outlet respectively and a substantially hemispherical hollow bulb formed from resilient material and having a rim portion which is sealed about an opening in said casing, said bulb when depressed causing fluid in said chamber to be displaced through the outlet and when allowed to relax, drawing fluid into the chamber through said inlet.

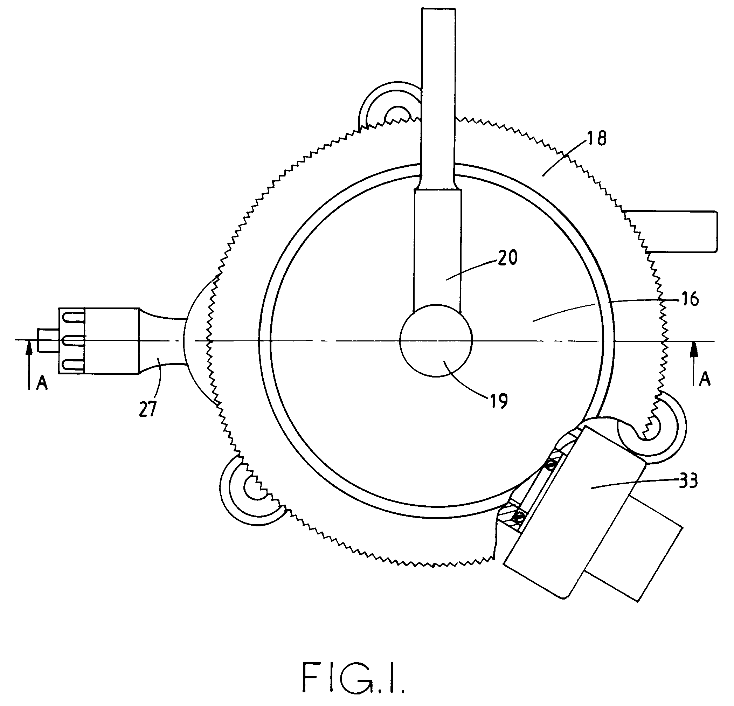

An example of a filter assembly in accordance with the invention will now be described with reference to the accompanying drawings in which:-
Figure 1 is a plan view of the assembly, and

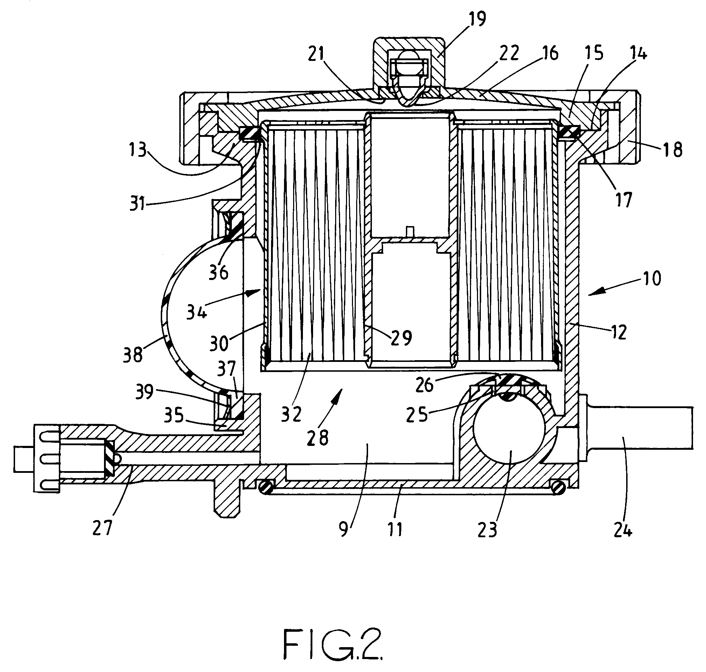

Figure 2 is a sectional side elevation along the line A-A of Figure 1.

Referring to the drawings, the filter assembly comprises a hollow cylindrical casing 10 having a base wall 11 and a side wall 12. At its upper and open end the casing defines an outwardly extending flange 13 which defines a first annular recess 14 in which is received an annular rim 15 of a domed closure 16. The rim 15 and the flange 13 are each recessed to accommodate an annular sealing member 17. The closure is retained in position by a retaining ring 18 which is arranged when fitted to the flange, to apply a clamping force between the rim and the flange to assure a fuel tight seal. The casing and closure define a filter chamber 9.

Formed integrally with the closure 16 is a cup shaped outlet body 19 extending from which is an outlet 20. A non-return valve is provided in the outlet body and is formed by a seating element 21 and a hollow generally conical valve element 22. The valve element under the action of gravity, closes the communication between the outlet and the filter chamber 9.

Formed in the lower part of the casing adjacent the base wall is an inlet chamber 23 which communicates with a fuel inlet 24. Passages 25 extend from the inlet chamber into the filter chamber and the flow of fuel through the passages 25 is controlled by a non-return valve which is in the form of a flap valve 26 having an umbrella shaped head. The valve is arranged to open to allow fuel to be drawn into the filter chamber as will be explained. Extending from the lower portion of the casing is a drain outlet 27 which is provided with a screw threaded plug and which in use, can be unscrewed to allow any water which has collected in the lower portion of the pump chamber, to be drained.

Mounted in the casing is a filter element 28 which comprises an inner tube 29 which is blanked off intermediate its ends, and an outer container 30 which is of generally inverted "L" shape in cross-section. The smaller wall defines a central opening in which the tube is secured and also a plurality of smaller openings. The longer wall which forms the outer cylindrical wall of the container, is provided with an outwardly extending flange 31 which locates on the base wall of the recess formed in the side wall 12 to accommodate the sealing member 17. Between the tube 29 and the inner surface of the cylindrical wall of the container is a filter medium 32 and this is conveniently formed by a number of turns of filter paper which are glued along their edges and are thereby secured together. The filter medium in cross-section is of zig zag form and defines inlet pockets into which fuel flows from the lower portion of the filter chamber 9 when fuel is drawn through the filter assembly. The fuel flows through the filter paper and then flows through the outlet 20. As previously mentioned water can collect in the lower portion of the filter chamber and an indication of the water level is provided by an electrical water sensor 33 which screws into the casing.

As described fuel is drawn in through the inlet 24 and through the filter chamber and the filter element therein by the action of a pump connected to the outlet 20. Such a pump might be a low pressure pump which is associated with a high pressure pump forming part of the fuel system of a diesel engine. When the filter element is changed or for some reason a large volume of air collects in the chamber, it is an advantage to be able to purge the air before attempting to start the associated engine.

In order to assist the purging of air or to prime the pump, there is provided in the side wall 12 of the casing a circular opening 34 which is surrounded by a hollow boss 35. The boss is provided with an internal recess which forms a step 36 against which is engaged a rim or flange 37 which is formed on the periphery of a substantially hemispherical hollow bulb 38. The bulb is formed from resilient plastics material and the flange of the bulb is held in sealing engagement with the step 36 by a self locking ring 39 which is pressed into engagement with the flange and locks against the side wall of the recess.

In operation, when the bulb is depressed there will be an effective reduction in volume of the filter chamber and fluid i.e. air and/or fuel within the filter chamber 9 will be pressurised and the valve element 22 will lift to allow flow through the outlet 20. When the bulb is allowed to relax, the effective volume of the filter chamber increases and air or fuel will be drawn into the filter chamber from the inlet 24 as permitted by the opening of the flap valve 26. It is thus possible to purge the filter chamber of air and prime the low pressure pump simply by repeated depression of the bulb followed by natural relaxation. In the normal use of the associated fuel system the pump will draw fuel through the filter chamber lifting the inlet and outlet valves in the process.

The construction described is extremely simple requiring no mechanical linkages or springs.

## Claims

1. A filter assembly including a casing (10) which with a closure (16) defines a filter chamber (9), inlet and outlet connections (24, 20) to said chamber a filter element (28) mounted in the chamber and through which the fuel passes as it flows between the inlet and the outlet and a manually operable priming pump operable to induce fluid flow between the inlet and the outlet characterised in that said priming pump comprises non-return valves (16, 19) in said inlet and outlet respectively and a substantially hemispherical hollow bulb (38) formed from resilient material and having a rim portion (37) which is sealed about an opening (34) in said casing, said bulb when depressed causing fluid in said chamber to be displaced through the outlet and when allowed to relax drawing fluid in the chamber through said inlet.

2. A filter according to Claim 1 characterised in that said opening is surrounded by a hollow boss (35) which is machined to define an internal step (36) against which the rim portion (37) is located, and a self locking ring (39) which is engaged with said rim portion to hold it in sealing engagement with said step, said ring locking with the adjacent wall of the boss.
